# EUROPEAN PATENT SPECIFICATION

(11) **EP 1 689 622 B1**
(45) Date of publication and mention of the grant of the patent: **24.09.2008**
(21) Application number: 04797039.7
(22) Date of filing: 18.11.2004
(51) Int. Cl.: B60R 22/42, B60R 22/36, B60R 22/34, B60R 22/10

(54) **SEAT BELT RETRACTION MECHANISM**
SITZGURTAUFROLLMECHANISMUS
MECANISME DE RAPPEL DE CEINTURES DE SECURITE

(30) Priority: 18.11.2003 AU 2003906340
(43) Date of publication of application: 16.08.2006
(73) Proprietor: Britax Childcare Pty Ltd., Sunshine, Melbourne 3020 (AU)
(72) Inventor: MACIEJCZYK, Wieslaw, Sunshine, VIC 3020 (AU)
(74) Representative: Ablett, Graham Keith
(86) International application number: PCT/AU2004/001591
(87) International publication number: WO 2005/049394

(56) References cited:
- CH-A- 374 899
- US-A- 3 180 684
- US-A- 5 160 186
- US-A- 5 681 094

## Description

### FIELD OF THE INVENTION

The present invention relates to a belt retraction mechanism. Such a device is known, for example, from CH374899 which discloses a spring-loaded spool for the retraction of a belt, and a releasable racket and pawl arrangement for preventing undesirable withdrawal of the belt. Alternatively a locking disk and pin arrangement is proposed which serves to prevent both retraction and withdrawal of the belt when engaged. In one particular form, the present invention relates to a seat belt retraction mechanism for a child restraint seat.

### BACKGROUND OF THE INVENTION

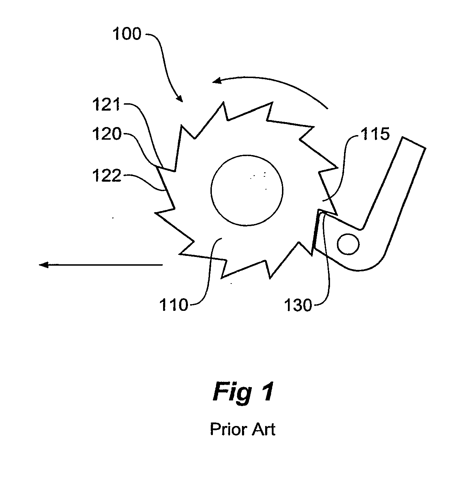

Current seat belt retraction mechanisms typically involve a combination of a spring loaded spool in combination with an associated ratchet and pawl arrangement. The pawl is spring loaded to engage a tooth of the ratchet thereby preventing rotation of the spool. However, the standard ratchet and pawl arrangement has a significant disadvantage. This is best illustrated by considering Fig. 1 which shows a seat belt retractor 100 having a spool 110 biased to retract the belt in an anti-clockwise direction (direction of curved arrow). The teeth 120 of the ratchet 115 have a first generally front vertical face 121 and a rear sloped face 122. In the event of the belt being pulled from the retractor 100 (direction of straight arrow), the pawl 130 abuts against the vertical face 121 thus locking the belt against any movement from the retractor 100.

In operation, the pawl 130 is first released from the ratchet 115 by an actuator thus allowing the spool 110 to rotate and the belt to be removed under tension from the spool 110. Following fitting of the belt over the child, often in combination with other separate belt and/ or buckle portions, the belt retracts under tension and the pawl 130 is allowed to re-engage with the ratchet 115 and thus the child is suitably restrained. However, the pawl 130 will often engage with the intermediate rear sloped surface 122 of a tooth 120 between two adjacent vertical faces 121. Thus when pulling the belt from the retractor, the spool 110 will move clockwise until the pawl 130 positively engages and abuts against the next vertical face 121. This implies that there is a certain amount of belt that will travel out from the retractor 100 before the pawl 130 and ratchet 115 mechanism locks the belt.

As a sudden clockwise direction of the spool 110 would be symptomatic of an accident, where the momentum of the child would act to remove the belt from the retractor 100, the extra amount of the travel in the belt will loosen the restraint resulting in a potentially dangerous and unsafe situation.

It is an object of the present invention to provide a belt retraction mechanism which enables improved belt locking.

### SUMMARY OF THE INVENTION

In one aspect the present invention accordingly provides a belt retraction mechanism including:
a biased spool having a belt wound thereon, said spool biased to retract said belt;
a pawl and ratchet mechanism for preventing rotation of said spool in a direction of retraction;
a biased cam member having an engagement surface, said cam member biased to an engagement position wherein said engagement surface engages said belt thereby preventing movement of said belt said cam member being moveable from said engagement position to an open position; and
an actuator moveable between an open setting and a closed setting, wherein said actuator is manually operable to said open setting to release said pawl and ratchet mechanism and furthermore cause said cam member to move from said engagement position to said open position, thereby allowing said belt to be moveable.

Combining a biased cam member that includes an engagement surface that locks the belt in position with a pawl and ratchet mechanism which prevents rotation of the spool provides an effective locking mechanism that locks the belt in place when the pawl and ratchet is engaged and the cam member is in the engagement position. Combining these features with an actuator which functions to release both of the separate locking means further results in a belt retraction mechanism that is convenient and easy to use.

Preferably, on actuation of said actuator from said open setting to said closed setting said pawl and ratchet mechanism reengages thereby preventing rotation of said spool.

This further simplifies the action of locking the seat belt retraction mechanism in position as the same actuator used to release the belt is also used to reengage the pawl and ratchet mechanism.

Preferably, on actuation of said actuator from said open setting to said closed setting, said cam member moves from said open position to said engagement position.

Once again this also greatly simplifies the operation of the seat belt retraction mechanism as use of a single actuator can both fully lock the belt in position or alternatively release the belt.

Preferably, said actuator includes biasing means to bias said actuator to said closed setting from said open setting on release of said actuator. This improves the safety of the belt retraction mechanism as the actuator is biased to a closed setting ensuring that the belt remains locked in position by default.

Preferably, said cam member is pivotable and includes a cam arm abutting said actuator, said cam arm located at an opposite end to said engagement surface, wherein on movement of said actuator to said open setting from said closed setting said cam member is caused to rotate from an engagement position to an open position.

By having the cam arm directly contacting the actuator, movement of the actuator can be used in a simple and effective manner to change the position of the cam member.

Preferably, said engagement surface engages said belt by gripping said belt between said engagement surface and an inlet surface, said inlet surface forming part of an inlet for said seat belt retraction mechanism into which said belt is retracted.

Preferably, whilst said actuator is in said closed setting, retraction of said belt causes said cam member to rotate to reduce the distance between said engagement surface and said inlet surface thereby causing said belt to be gripped more tightly. This further increases the safety aspects of the belt retraction mechanism as any sudden retraction of the belt such as would be encountered in an accident results in the belt being locked with greater force.

Preferably, said engagement surface includes a number of ridges or teeth to engage said belt.

Preferably, said actuator is retained in substantially linear slots to guide movement of said actuator when acting against said cam arm.

Preferably, said actuator further includes the pawl of said pawl and ratchet mechanism.

Preferably, said actuator and said pawl are of unitary construction.

Preferably, said actuator further includes a handle, said handle arranged to be operable from a location substantially opposite to said inlet of said belt retraction mechanism into which said belt is retracted. By positioning the handle opposite to the inlet, one hand may be used to pull the belt from the belt retraction mechanism whilst the other hand operates the handle in a convenient and ergonomic position.

### BRIEF DESCRIPTION OF THE DRAWINGS

A preferred embodiment of the present invention will be discussed with reference to the accompanying drawings wherein:
Fig. 1 is a side view of a prior art pawl and ratchet mechanism as employed in a seat belt retraction device;
Fig. 2 is a first upper side perspective view of a belt retraction mechanism without the housing cover according to a preferred embodiment of the present invention;
Fig. 3 is a second upper side perspective view of the belt retraction mechanism illustrated in Fig. 2;
Fig. 4 is a sectional side view of the belt retraction mechanism including the housing cover illustrated in Fig. 2 in the engagement position; and
Fig. 5 is a sectional side view of the belt retraction mechanism illustrated in Fig. 4 in the open position.
In the following description, like reference characters designate like or corresponding parts throughout the several views of the drawings.

### DESCRIPTION OF PREFERRED EMBODIMENT

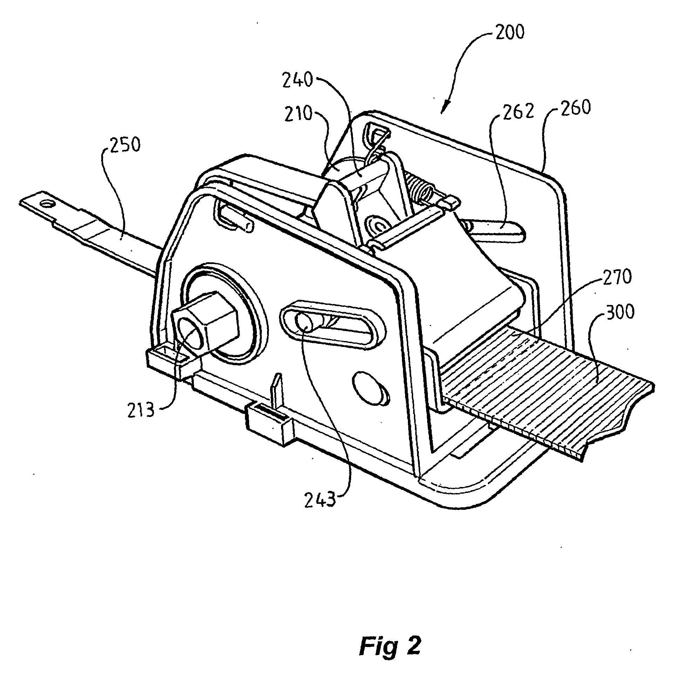

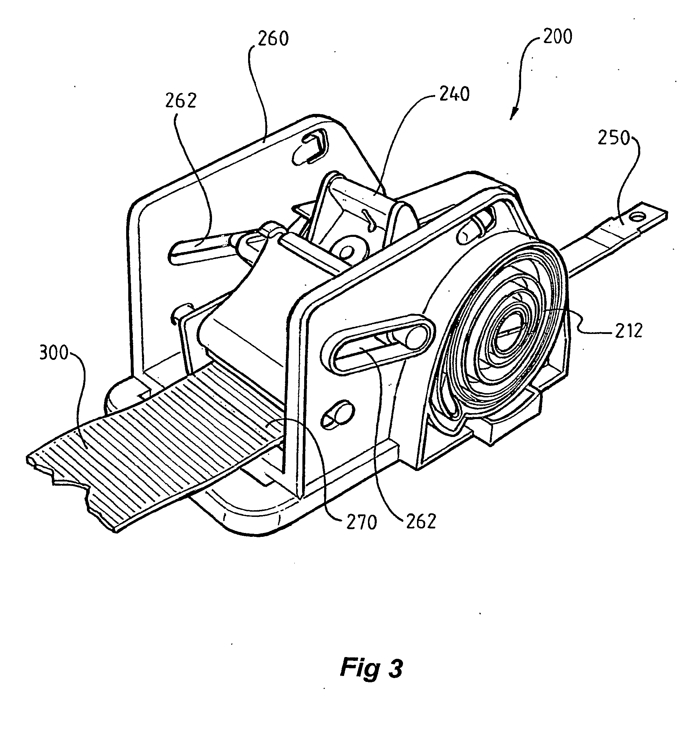

Referring now to Figs. 2 and 3, there is illustrated a belt retraction mechanism 200 according to a preferred embodiment of the present invention. Whilst this embodiment is directly applicable to the harness of a child restraint or safety seat, the invention could equally be applied to other situations where a lockable belt retraction mechanism is required such as a safety harness for a seat or where belts are employed to secure goods whilst being stowed.

Belt retraction mechanism 200 includes spool 210 upon which belt 300 is wound upon. Spool 210 is spring loaded by clockwork spring 212 which applies a rotating force in an anticlockwise direction as depicted in Fig. 3 thereby retracting belt 300 into inlet 270 when the spool 210 is released. Equally other spring arrangements which bias the spool 210 to retract belt 300, such as a torsion spring or even resilient band arrangements are contemplated to be within the scope of the invention. To further tighten the belt 300 a shaft (not shown) can be mounted to engage the hexagonal nut 213 thus allowing manual rotation of the spool to tighten the belt 300.

Belt retraction mechanism 200 further includes actuator 240 mounted within housing 260 by protrusions 243 which slide in slots 262 located on each side of housing 260. Attached to actuator 240 is handle 250 which operates to move actuator 240 along slots 262.

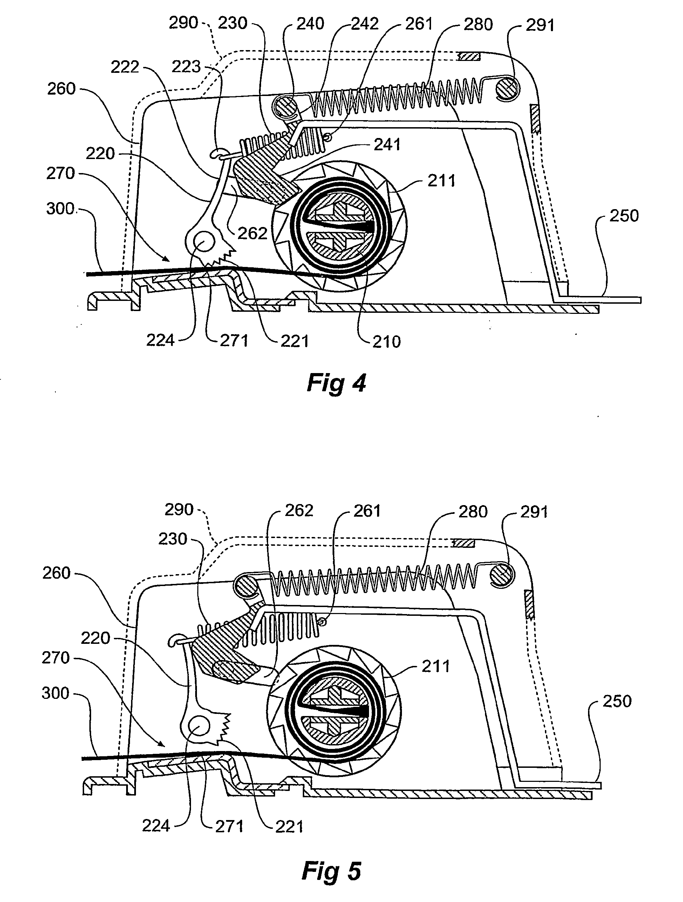

Referring now to Fig. 4, actuator 240 also includes pawl 241 which in one position engages with the teeth of ratchet 211 which are located on one side of spool 210 and oriented to block retraction of the belt 300 onto spool 210. Attached to actuator 240 at slot 242 is coil spring 280 whose other end is attached to housing cover 290 at mounting point 291. Coil spring 280 functions to bias pawl 241 into engagement with ratchet teeth 211. Abutting actuator 240 is pivotable cam member 220 which consists of an arm portion 222 and cam engagement surface 221 which includes a plurality of teeth or ridges to improve gripping. Cam member 220 is pivotable about an axis defined by bolt 224 which attaches cam member 220 to housing 260.

Rotation of the cam member 220 in a clockwise direction as seen in Fig. 4 forces the cam engagement surface 221 against the belt 300. Withdrawal force applied to the belt 300 will cause the cam engagement surface 221 to grip the belt 300 and to urge it further in a clockwise direction thereby causing the belt 300 to be compressed between the cam engagement surface 221 and bottom surface 271. This will prevent withdrawal of the belt 300.

A coil spring 230 is attached to an upper lip 223 of arm portion 222 and is attached at its opposite end to a slot 261 in housing 260. Coil spring 230 acts to bias the cam member 220 against actuator 240 when it is acting to release the cam member 220 and to further hold the cam engagement surface 221 against the belt 300 when there is clearance between the actuator 240 and cam member 220 to ensure that clamping of the belt occurs as soon as any withdrawal force is applied. Clearly, as would be apparent to those skilled in the art, other biasing means may be used in substitution for coil spring 230.

Referring now to Figs. 4 and 5, in operation, handle 250 is pushed towards housing 260 causing actuator 240 to slide along slots 262 against the biasing action of both coil springs 230, 280 thereby releasing pawl 241 from ratchet 211 and furthermore pivoting cam member 220 so that the cam engagement surface 221 is moved away from the belt 300 thereby releasing the belt 300. As pawl 241 is no longer preventing rotation of spool 210 and as belt 300 is free to move between cam engagement surface 221 and bottom surface 271, belt 300 will be retracted due to action of clockwork spring 212. The belt 300 can also be withdrawn thereby tensioning clockwork spring 212. On release of handle 250, cam member 220 under the action of coil spring 230 and without any opposing force from actuator 240 will return to an engagement position where engagement surface 221 will grip belt 300 to prevent removal. Furthermore, actuator 240 including pawl 241 will be drawn towards spool 210 along slots 262 to attempt to engage with ratchet teeth 211.

As cam member 220 moves to the engagement position a retraction force on the belt 300 will cause the cam member 220 to clamp the belt 300 virtually instantaneously. However, if no retraction force is applied, the clockwork spring 212 in spool 210 will have sufficient force to rotate in an anti-clockwise direction (as seen in Fig. 4) until pawl 241 engages with the next ratchet tooth 211. Belt 300 pulled in this direction with respect to the cam member 220 will act to release the cam member 220 thereby allowing further retraction of the belt 300 until rotation of the spool is arrested by the ratchet 211, or the harness being tight on the occupant of the safety seat. Pivoting cam member 220 takes the full load caused by any forced removal of belt 300 from belt retraction mechanism 200 once actuator 240 has been released.

In another embodiment, additional biasing means may be included to apply a greater force to the cam member 220 to urge it into more positive engagement with the belt 300 so that clamping of the belt occurs quickly without further movement of the cam member 220 being required from retraction force on belt 300.

As would be apparent to those skilled in the art, belt retraction mechanism 200 provides substantial advantages over the prior art. As the locking function is performed by the cam member 220 the disadvantages of prior art pawl and ratchet mechanisms are substantially addressed.

The invention has the advantage of holding the belt in its withdrawn position. For example, if the actuator 240 is operated and belt 300 withdrawn to extend the harness of the safety seat, then the harness and belt 300 will stay in that extended position when the actuator 240 is released. This is due to the pawl 241 engaging a ratchet tooth 211 which prevents rotation of the spool 210 in the direction of retraction. The belt 300 and the harness will retract as soon as the actuator 240 is again operated.

In an alternative embodiment, the pawl 241 and ratchet 211 may be deleted from the actuator 240 and spool 210. This will result in a positive retracting force always being applied to the belt 300 and will allow further tightening force to be applied manually to the spool 210. For example, a shaft mounted to, or engagable with, the spool 210 having an external handle could be used to further retract the belt 300 to maximise tension in the safety seat harness. The belt 300 would move freely past the cam member 220 when moving in this direction.

Although a preferred embodiment of the present invention has been described in the foregoing detailed description, it will be understood that the invention is not limited to the embodiment disclosed, but is capable of numerous rearrangements, modifications and substitutions without departing from the scope of the invention as set forth and defined by the following claims.

## Claims

1. A belt retraction mechanism including:
a biased spool having a belt wound thereon, said spool biased to retract said belt;
a pawl and ratchet mechanism for preventing rotation of said spool in a direction of retraction;
a biased cam member having an engagement surface, said cam member being biased to an engagement position wherein said engagement surface engages said belt thereby preventing movement of said belt, said cam member being moveable from said engagement position to an open position; and
an actuator moveable between an open setting and a closed setting, wherein said actuator is manually operable to said open setting to release said pawl and ratchet mechanism and furthermore cause said cam member to move from said engagement position to said open position, thereby allowing said belt to be moveable.

2. A belt retraction mechanism as claimed in claim 1, wherein on actuation of said actuator from said open setting to said closed setting said pawl and ratchet mechanism reengages thereby preventing rotation of said spool.

3. A belt retraction mechanism as claimed in claim 1 or 2, wherein on actuation of said actuator from said open setting to said closed setting, said cam member moves from said open position to said engagement position.

4. A belt retraction mechanism as claimed in any one of the preceding claims, wherein said actuator includes biasing means to bias said actuator to said closed setting from said open setting on release of said actuator.

5. A belt retraction mechanism as claimed in any one of the preceding claims, wherein said cam member is pivotable and includes a cam arm abutting said actuator, said cam arm located at an opposite end to said engagement surface, wherein on movement of said actuator to said open setting from said closed setting said cam member is caused to rotate from an engagement position to an open position.

6. A belt retraction mechanism as claimed in claim 5, wherein said engagement surface engages said belt by gripping said belt between said engagement surface and an inlet surface, said inlet surface forming part of an inlet for said seat belt retraction mechanism into which said belt is retracted.

7. A belt retraction mechanism as claimed in claim 6, wherein whilst said actuator is in said closed setting, retraction of said belt causes said cam member to rotate to reduce the distance between said engagement surface and said inlet surface thereby causing said belt to be gripped more tightly.

8. A belt retraction mechanism as claimed in any one of the preceding claims, wherein said engagement surface includes a number of ridges or teeth to engage said belt.

9. A belt retraction mechanism as claimed in claims 5 to 8, wherein said actuator is retained in substantially linear slots to guide movement of said actuator when acting against said cam arm.

10. A belt retraction mechanism as claimed in any one of the preceding claims, wherein said actuator further includes the pawl of said pawl and ratchet mechanism.

11. A belt retraction mechanism as claimed in claim 10, wherein said actuator and said pawl are of unitary construction.

12. A belt retraction mechanism as claimed in any one of claims 6 to 11, wherein said actuator further includes a handle, said handle arranged to be operable from a location substantially opposite to said inlet of said belt retraction mechanism into which said belt is retracted.

## Patentansprüche

1. Gurteinziehmechanismus, mit:
einer vorgespannten Spule, auf die ein Gurt aufgewickelt ist und die so vorgespannt ist, dass sie diesen einzieht;
einem Klauen- und Ratschenmechanismus zum Verhindern einer Drehung der Spule in der Einziehrichtung;
einem vorgespannten Nockenelement mit einer Klemmfläche, das in eine Klemmposition vorgespannt wird, in der die Klemmfläche den Gurt klemmt, um eine Bewegung desselben zu verhindern, und wobei dieses Nockenelement ausgehend von der Klemmposition in eine offene Position beweglich ist; und
einem Stellglied, das zwischen einer offenen und einer geschlossenen Einstellung beweglich ist, wobei es von Hand in die offene Einstellung bedienbar ist, um den Klauen- und Ratschenmechanismus zu lösen und um ferner dafür zu sorgen, dass sich das Nockenelement von der Klemmposition in die offene Position bewegt, um es **dadurch** zu ermöglichen, dass sich der Gurt bewegen kann.

2. Gurteinziehmechanismus nach Anspruch 1, bei dem beim Betätigen des Stellglieds von der offenen in die geschlossene Einstellung der Klauen- und Ratschenmechanismus wieder in Eingriff tritt, um **dadurch** eine Drehung der Spule zu verhindern.

3. Gurteinziehmechanismus nach Anspruch 1 oder 2, bei dem beim Betätigen des Stellglieds von der offenen in die geschlossene Einstellung das Nockenelement eine Bewegung von der offenen in die Klemmposition ausführt.

4. Gurteinziehmechanismus nach einem der vorstehenden Ansprüche, bei dem das Stellglied eine Vorspanneinrichtung aufweist, um es bei seinem Lösen von seiner offenen Einstellung in die geschlossene Einstellung vorzuspannen.

5. Gurteinziehmechanismus nach einem der vorstehenden Ansprüche, bei dem das Nockenelement verschwenkbar ist und einen am Stellglied anschlagenden Nockenarm aufweist, der sich am entgegengesetzten Ende in Bezug auf die Klemmfläche befindet, wobei bei einer Bewegung des Stellglieds in die offene Stellung ausgehend von der geschlossenen Stellung dafür gesorgt wird, dass sich das Nockenelement von einer Klemmposition in eine offene Position dreht.

6. Gurteinziehmechanismus nach Anspruch 5, bei dem die Klemmfläche den Gurt **dadurch** klemmt, dass sie ihn zwischen sich und einer Einlassfläche festhält, die einen Teil eines Einlasses für den Sitzgurteinziehmechanismus, in den der Gurt eingezogen wird, bildet.

7. Gurteinziehmechanismus nach Anspruch 6, bei dem ein Einziehen des Gurts, während sich das Stellglied in seiner geschlossenen Einstellung befindet, dafür sorgt, dass sich das Nockenelement so dreht, dass der Abstand zwischen der Klemmfläche und der Einlassfläche verkleinert wird, um **dadurch** dafür zu sorgen, dass der Gurt fester geklemmt wird.

8. Gurteinziehmechanismus nach einem der vorstehenden Ansprüche, bei dem die Klemmfläche eine Anzahl von Rippen oder Zähnen zum Klemmen des Gurts aufweist.

9. Gurteinziehmechanismus nach einem der Ansprüche 5 bis 8, bei dem das Stellglied in im wesentlichen geradlinigen Schlitzen aufgenommen ist, um seine Bewegung zu führen, wenn es auf den Nockenarm einwirkt.

10. Gurteinziehmechanismus nach einem der vorstehenden Ansprüche, bei dem das Stellglied ferner die Klaue des Klauen- und Ratschenmechanismus enthält.

11. Gurteinziehmechanismus nach Anspruch 10, bei dem das Stellglied und die Klaue einen einstückigen Aufbau bilden.

12. Gurteinziehmechanismus nach einem der Ansprüche 6 bis 11, bei dem das Stellglied ferner einen Griff aufweist, der so angeordnet ist, dass er von einer Stelle im Wesentlichen entgegengesetzt zum Einlass des Gurteinziehmechanismus, in den der Gurt eingezogen wird, bedienbar ist.

## Revendications

1. Un mécanisme de rétraction de ceinture comprenant :
une bobine actionnée par un ressort, ayant une ceinture enroulée sur elle, ladite bobine étant chargée de manière à tendre à rétracter ladite ceinture ;
un mécanisme à cliquet et à roue à rochets pour empêcher la rotation de ladite bobine dans une direction de rétraction ;
un organe formant came actionné par ressort, ayant une surface d'engagement, ledit organe formant came étant maintenu normalement dans une position d'engagement dans laquelle ladite surface d'engagement vient en engagement avec ladite ceinture, empêchant de ce fait le mouvement de ladite ceinture, ledit organe formant came étant mobile depuis ladite position d'engagement vers une position d'ouverture ; et
un organe d'actionnement mobile entre un état d'ouverture et un état de fermeture, ledit organe d'actionnement étant actionnable manuellement vers ledit état d'ouverture afin de libérer ledit mécanisme à cliquet et à roue à rochets et ensuite de provoquer le déplacement dudit organe formant came de ladite position d'engagement jusque dans ladite position d'ouverture, permettant de ce fait à ladite ceinture d'être mobile.

2. Un mécanisme de rétraction de ceinture selon la revendication 1, dans lequel, suite à l'actionnement dudit organe d'actionnement depuis ledit état d'ouverture vers ledit état de fermeture, ledit mécanisme à cliquet et à roue à rochets revient en engagement, empêchant de ce fait la rotation de ladite bobine.

3. Un mécanisme de rétraction de ceinture selon la revendication 1 ou la revendication 2, dans lequel, suite à l'actionnement dudit organe d'actionnement depuis ledit état d'ouverture vers ledit état de fermeture, ledit organe formant came se déplace de ladite position d'ouverture jusque dans ladite position d'engagement.

4. Un mécanisme de rétraction de ceinture selon l'une quelconque des revendications précédentes, dans lequel ledit organe d'actionnement inclut des moyens de sollicitation pour solliciter ledit organe d'actionnement vers ledit état de fermeture depuis ledit état d'ouverture lors de la libération dudit organe d'actionnement.

5. Un mécanisme de rétraction de ceinture selon l'une quelconque des revendications précédentes, dans lequel ledit organe formant came est mobile en pivotement et inclut un bras de came venant en butée contre ledit organe d'actionnement, ledit bras de came étant situé à une extrémité opposée par rapport à ladite surface d'engagement, de sorte que, lors du mouvement dudit organe d'actionnement dans ledit état d'ouverture depuis ledit état de fermeture, ledit organe formant came est amené à tourner depuis une position d'engagement jusque dans une position d'ouverture.

6. Un mécanisme de rétraction de ceinture selon la revendication 5, dans lequel ladite surface d'engagement vient en prise avec ladite ceinture par saisie de ladite ceinture entre ladite surface d'engagement et une surface d'entrée, ladite surface d'entrée formant une partie d'une entrée pour ledit mécanisme de rétraction de ceinture dans laquelle ladite ceinture est rétractée.

7. Un mécanisme de rétraction de ceinture selon la revendication 6, dans lequel, alors que ledit organe d'actionnement est dans ledit état de fermeture, la rétraction de ladite ceinture provoque le pivotement dudit organe formant came de manière à réduire la distance entre ladite surface d'engagement et ladite surface d'entrée, amenant de ce fait ladite ceinture à être saisie plus fortement.

8. Un mécanisme de rétraction de ceinture selon l'une quelconque des revendications précédentes, dans lequel ladite surface d'engagement inclut un certain nombre d'arêtes ou de dents pour venir en prise avec ladite ceinture.

9. Un mécanisme de rétraction de ceinture selon l'une des revendications 5 à 8, dans lequel ledit organe d'actionnement est maintenu dans des fentes substantiellement linéaires pour guider le mouvement dudit organe d'actionnement lorsqu'il agit contre ledit bras de came.

10. Un mécanisme de rétraction de ceinture selon l'une quelconque des revendications précédentes, dans lequel ledit organe d'actionnement inclut en outre le cliquet dudit mécanisme à cliquet et à roue à rochets.

11. Un mécanisme de rétraction de ceinture selon la revendication 10, dans lequel ledit organe d'actionnement et ledit cliquet sont de construction unitaire.

12. Un mécanisme de rétraction de ceinture selon l'une quelconque des revendications 6 à 11, dans lequel ledit organe d'actionnement inclut en outre une poignée, cette poignée étant agencée pour être actionnée depuis une position sensiblement opposée à ladite entrée dudit mécanisme de rétraction de ceinture dans laquelle ladite ceinture est rétractée.
